# EUROPÄISCHE PATENTSCHRIFT

(11) **EP 2 036 242 B1**
(45) Veröffentlichungstag und Bekanntmachung des Hinweises auf die Patenterteilung: **16.12.2009**
(21) Anmeldenummer: 07718521.3
(22) Anmeldetag: 27.06.2007
(51) Int. Cl.: H04L 9/08

(54) **KNOTENEINRICHTUNG FÜR EIN NETZWERK MIT QUANTENKRYPTOGRAFISCHEN VERBINDUNGEN SOWIE KNOTENMODUL FÜR EINE DERARTIGE KNOTENEINRICHTUNG**
HUB DEVICE FOR A NETWORK COMPRISING QUANTUM CRYPTOGRAPHIC CONNECTIONS AND NODE MODULE FOR SAID HUB DEVICE
DISPOSITIF NOEUD POUR UN RESEAU A LIAISONS A CRYPTOGRAPHIE QUANTIQUE AINSI QUE MODULE DE NOEUD POUR UN DISPOSITIF NOEUD DE CE TYPE

(30) Priorität: 03.07.2006 AT 11182006
(43) Veröffentlichungstag der Anmeldung: 18.03.2009
(73) Patentinhaber: AIT Austrian Institute of Technology GmbH, 1220 Wien (AT)
(72) Erfinder: LÄNGER, Thomas, 1040 Wien (AT)
(74) Vertreter: Sonn & Partner Patentanwälte
(86) Internationale Anmeldenummer: PCT/AT2007/000316
(87) Internationale Veröffentlichungsnummer: WO 2008/003104

(56) Entgegenhaltungen:
- US-B1- 7 068 790
- PEEV M ET AL: "Quantenkryptographisch gesicherte Netzwerke zur Schlüsselverteilung: Grundlagen, Topologien und das Quantum-Back-Bone des Integrierten Projekts =Quantum key distribution networks: basic concepts, topologies and the SECOQCquantum back bone" ELEKTROTECHNIK UND INFORMATIONSTECHNIK, SPRINGER VERLAG, WIEN, AT, Bd. 124, Nr. 5, Mai 2007 (2007-05), Seiten 126-130, XP009089098 ISSN: 0932-383X
- ELLIOTT C: "Building the quantum network" NEW JOURNAL OF PHYSICS, INSTITUTE OF PHYSICS PUBLISHING, BRISTOL, GB, Bd. 4, 12. Juli 2002 (2002-07-12), Seiten 461-4612, XP002271991 ISSN: 1367-2630
- W. DÜR, H-J. BRIEGEL, J.I. CIRAC AND P. ZOLLER: "Quantum repeaters based on entanglement purification" QUANT PH, [Online] 28. Juni 2006 (2006-06-28), Seiten 1-19, XP002452399 Gefunden im Internet: URL:http://arxiv.org/PS_cache/quant-ph/pdf /9808/9808065v1.pdf> [gefunden am 2007-09-20]
- D COLLINS, N. GISIN AND H DE RIEDMATTEN: "Quantum relays for long distance quantum cryptography" JOURNAL OF MODERN OPTICS, [Online] 20. März 2005 (2005-03-20), Seiten 735-753, XP002452400 Gefunden im Internet: URL:http://www.informaworld.com/smpp/title ~content=t713191304> [gefunden am 2007-09-20]

## Beschreibung

Die Erfindung betrifft eine Knoteneinrichtung für ein Netzwerk mit quantenkryptographischen Verbindungen mit Quantenkanälen und öffentlichen Kanälen, welche Knoteneinrichtung Quantenoptik-Mittel zur Verbindung mit den jeweiligen Quantenkanälen, für die Erzeugung von quantenkryptographischen Geheimnissen bzw. Schlüsseln, Mittel zur Verwaltung von symmetrischen Geheimnissen bzw. Schlüsseln, Kryptographie-Mittel und damit verbundene Treiber-Mittel zur Erzeugung von Kryptogrammen und deren Übertragung über einen öffentlichen Kanal aufweisen.

Weiters bezieht sich die Erfindung auf ein Knotenmodul für eine solche Knoteneinrichtung.

Mit Quantenkryptographie wird die Technik der Erzeugung und Verteilung symmetrischer Geheimnisse bezeichnet, wobei die Sicherheit, als Maß für die Vertraulichkeit und die Unverfälschtheit von an zwei voneinander entfernten Orten ausgegebenen identischen Bitfolgen, mit Methoden der Quanteninformationstheorie mathematisch exakt nachgewiesen werden kann (informationstheoretische Sicherheit). Die erzeugten und verteilten symmetrischen Geheimnisse können in weiterer Folge z.B. als Schlüssel für symmetrische kryptographische Chiffrierverfahren verwendet werden. Im Gegensatz dazu gibt es für herkömmliche, auf asymmetrischer Kryptographie basierende Schlüsselverteilungs-Systeme keinen derartigen Sicherheitsbeweis.

Die Quantenkryptographie wurde interdisziplinär zwischen den wissenschaftlichen Gebieten Quantenphysik, Quantenoptik, Informationstheorie, Kryptographie und Informatik entwickelt. Ein Überblick über die Grundlagen und Verfahren sowie die historische Entwicklung der Quantenkryptographie ist in den Artikeln Gisin, N., G. Ribordy, W. Tittel, and H. Zbinden, "Quantum Cryptography", 2002 Rev. Mod. Phys. 74, 145; und Dusêk, M, N. Lütkenhaus, M. Hendrych, "Quantum Cryptography", 2006, Progress in Optics, vol. 49, Edt. E. Wolf (Elsevier, 2006), enthalten.

Eine übliche quantenkryptographische Verbindung (engl.: quantum cryptographic link) besteht immer aus zwei Stationen bzw. Apparaturen. In der Literatur und auch im Folgenden werden diese Stationen üblicherweise als ALICE- und BOB-Komponente bezeichnet. Diese an zwei voneinander entfernten Orten aufgestellten Stationen sind durch einen optischen Quantenkanal (Glasfaser-gebunden oder durch den freien Raum) sowie durch einen herkömmlichen, klassischen, unverschlüsselten, elektronischen Kommunikationskanal, auch öffentlicher Kanal genannt, verbunden.

Das Dokument D1 : US 7 068 790 B1 wird als nächstliegender Stand der Technik angesehen. Es offenbart Knoteneinrichtung für ein Netzwerk mit quantenkryptographischen Verbindungen mit Quantenkanälen und offentlichen Kanälen; welche Knoteneinrichtung Quantenoptikmittel zur Verbindung mit den jeweiligen Quantenkanälen, für die quantenkryptographische Erzeugung von Schlüsseln, Mittel zur Verwaltung von symmetrischen Schlüsseln, Kryptographie-Mittel zur Erzeugung von Kryptogrammen und damit verbundene Treiber-Mittel zu deren Übertragung über einen öffentlichen Kanal aufweist.

Eine derartige quantenkryptographische Verbindung erzeugt in ihren ALICE- und BOB-Komponenten laufend symmetrische (d.h.: in den ALICE- und BOB-Komponenten identische) Geheimnisse, die zur weiteren Verwendung, z.B. als Schlüssel in angeschlossenen kryptographischen Systemen, über Datenkanäle nach außen geliefert werden. In den ALICE- und BOB-Komponenten können aber auch bereits kryptographische Systeme zur Herstellung eines sog. virtuellen privaten Netzwerk-Tunnels (VPN-Tunnel - engl.: virtual private network tunnel) enthalten sein, wobei in diesem Fall keine Geheimnisse (Schlüssel) nach außen geliefert werden, sondern die zu verschlüsselnden Daten entweder in das ALICE- oder das BOB-Modul hineingeleitet werden, um unter Zuhilfenahme der erzeugten Schlüssel mit Strom- oder Blockchiffren verschlüsselt zu werden. Das Chiffrat (Kryptogramm) wird dann über den klassischen Datenkanal zur Gegenstelle übertragen, wo die Daten nach der Entschlüsselung wiederum aus dem Modul herausgeleitet werden. Solche Systeme werden auch als Link-Enkryptoren bezeichnet.

Die Quantenoptik-Mittel der quantenkryptographischen Stationen, z.B. der ALICE- und BOB-Komponenten, sind je nach den verwendeten Technologien recht unterschiedlich aufgebaut. Ihnen allen ist jedoch gemein, dass die ALICE-Komponente, der Quantenkanal und die BOB-Komponente, mit Hilfe von optischen und elektronischen Komponenten, nämlich insbesondere Photonen-Quellen, Photonen-Detektoren, optischen Fasern, Interferometern, Spiegeln, Linsen, Kristallen, Sensoren, Aktuatoren usw., ein quantenoptisches System bilden, in dem Photonen erzeugt, übertragen und gemessen werden. Die Ergebnisse von Messungen in den ALICE- und BOB-Komponenten enthalten korrelierte Information, so dass diese Komponenten ein identes Geheimnis aufbauen können. Dazu ist es jedoch notwendig, dass die ALICE- und BOB-Komponenten während der Ausführung des Schlüsselerzeugungs-Protokolls (engl. key distillation protocol) weitere klassische Information über den sie ebenfalls verbindenden öffentlichen Kanal übertragen.

Für weitere Informationen betreffend diese bereits gut bekannte Technik sei außer auf die vorstehend erwähnten Artikel von Gisin et al. und Dusek et al., und die darin enthaltenen Zitate, auch auf die WO 2004/049623 A1 verwiesen. Der Inhalt dieser Publikationen wird durch Bezugnahme als hier enthalten angesehen, um eine genauere Beschreibung der bekannten quantenkryptographischen Techniken hinsichtlich Schlüsselgenerierung zu erübrigen.

Durch physikalische Eigenschaften ist die maximale Länge eines solchen für die Quantenkryptographie geeigneten Quantenkanals beschränkt; insbesondere wirkt sich hier die Dämpfung des Lichts im Glasfaserkabel oder aber im freien Raum aus; aus diesem Grund sowie auch im Hinblick darauf, die Verfügbarkeit von quantenkryptographischen Verbindungen zu verbessern, ist es wünschenswert, mehrere solcher binärer quantenkryptographischer Verbindungen zu einer Netzwerkstruktur zusammenzuschließen; dabei können dann auch größere Distanzen mit erhöhter Ausfallsicherheit überbrückt werden. Des Weiteren kann die Schlüsselverteilungs-Rate (erzeugte und verteilte Schlüssel pro Zeiteinheit) durch die Nutzung von parallelen Übertragungspfaden in einem Netzwerk gegenüber einer einzelnen quantenkryptographischen Verbindung gesteigert werden. Ein solches quantenkryptographisches Netzwerk (engl.: Quantum Cryptographic Network oder kurz Quantum Network) kann aus Netzwerkknoten bestehen, die untereinander mit binären quantenkryptographischen Verbindungen verbunden sind; in diesem Zusammenhang kann beispielsweise auf den Artikel von Chip Elliott, "Building the quantum network", New Journal of Physics 4 (2002), 46.1-46.12, IOP Publishing Ltd und Deutsche Physikalische Gesellschaft, verwiesen werden. In diesem Artikel sind überwiegend einfache Netzwerke mit Vertrauens-Relais-Stationen (trusted relays) geoffenbart, es ist jedoch auch beschrieben, wie im Fall des Ausfalls einer quantenkryptographischen Verbindung ein Verbindungsweg über einen anderen Kommunikationspfad, über andere Relais-Stationen, zur gewünschten Endstation aufgebaut werden kann.

Im Allgemeinen gilt hier, dass Knoten in einem solchen Netzwerk mehrere, beispielsweise zwei, drei, vier etc., quantenkryptographische Verbindungen zu anderen Knoten des Netzwerks aufweisen, wobei in jeweils einer solchen quantenkryptographischen Verbindung ein Quantenkanal und ein klassischer Datenkanal, also öffentlicher Kanal, vorhanden sind. Für jede dieser quantenkryptographischen Verbindungen ist eine eigene Implementierung von Schlüsselverwaltungs-Mitteln, Kryptographie-Mitteln und TreiberMitteln für den öffentlichen Kanal notwendig, abgesehen von den spezifischen quantenkryptographischen Komponenten, nämlich den eigentlichen Quantenoptik-Mitteln sowie gegebenenfalls Protokollmitteln, die für die jeweiligen Schlüsselerzeugungs-Protokolle verantwortlich sind. Dies stellt für die einzelnen Knoten einen erheblichen Aufwand dar, welcher umso größer wird, je mehr quantenkryptographische Verbindungen für einen Knoten vorgesehen sind.

Aufgabe der vorliegenden Erfindung ist es nun, hier eine Vereinfachung in der Struktur einer solchen Knoteneinrichtung zu ermöglichen und so durch die Verringerung des apparativen und programmtechnischen Aufwands eine Vereinfachung in der Implementierung und eine Reduktion der Implementierungskosten zu erzielen.

Zur Lösung dieser Aufgabe sieht die Erfindung eine Knoteneinrichtung bzw. ein Knotenmodul wie in den anliegenden unabhängigen Ansprüchen definiert vor. Vorteilhafte Ausführungsformen bzw. Weiterbildungen sind in den abhängigen Ansprüchen angegeben.

Bei der erfindungsgemäßen Technik werden bestimmte Mittel, nämlich insbesondere die Schlüsselverwaltungs-Mittel, die Kryptographie-Mittel und die Treiber-Mittel für den öffentlichen Kanal, aus den einzelnen quantenkryptographischen Verbindungen "herausgehoben" und als zentrale Schlüsselverwaltungs-Komponente, Kryptographie-Komponente und Treiber-Komponente für den öffentlichen Kanal in einem gemeinsamen Knotenmodul vorgesehen und so allen quantenkryptographischen Verbindungen des jeweiligen Knotens zentral zur Verfügung gestellt. Diese gemeinsamen, zentralen Komponenten bedienen somit alle quantenkryptographischen Verbindungen, die ihrerseits insofern vereinfacht bzw. modifiziert sein können, als dann keine Implementierungen für diese drei genannten Komponenten mehr erforderlich sind, so dass für diese Verbindungen nur mehr die Quantenoptik-Mittel sowie gegebenenfalls Protokollprozessor-Mittel in den dezentralen Quantenkanal-Modulen - im Anschluss an den jeweiligen Quantenkanal - verbleiben können.

Damit das gemeinsame Knotenmodul mit den einzelnen Quantenkanal-Modulen hinsichtlich Kommunikation betreffend die symmetrischen Geheimnisse (bzw. Schlüssel) sowie Protokoll-Nachrichten in effizienter Weise kommunizieren kann, sind zweckmäßigerweise eine gemeinsame Schlüssel-Schnittstelle sowie gegebenenfalls auch eine gemeinsame Protokoll-Nachrichten-Schnittstelle vorhanden; mit diesen Schnittstellen sind die einzelnen Quantenkanal-Module verbunden, und innerhalb des Knotenmoduls sind an diese Schnittstellen die Schlüsselverwaltungs-Komponente und die Kryptographie-Komponente angeschlossen. Im Einzelnen sind, was die Quantenkanal-Module betrifft, insbesondere die jeweiligen Protokollprozessor-Komponenten mit der Schlüssel-Schnittstelle und/oder der Protokoll-Nachrichten-Schnittstelle verbunden.

Bevorzugt ist weiters im gemeinsamen Knotenmodul eine gemeinsame, zentrale Netzwerks-Komponente in Verbindung mit der Schlüsselverwaltungs-Komponente und der Kryptographie-Komponente enthalten. Diese Netzwerks-Komponente dient u.a. dazu, die Verfahrensweise festzulegen, gemäß der etwaige in der Schlüsselverwaltungs-Komponente befindliche Geheimnisse (Schlüssel), mit Hilfe der Kryptographie-Komponente und der Treiber-Komponente für den öffentlichen Kanal sicher zur Schlüsselverwaltungs-Komponente eines anderen Netzwerkknotens übertragen werden. Diese Weiterreichung von Geheimnissen (Schlüsseln) von einem Knoten zu einem anderen Knoten ist nur dann möglich, wenn diese ein Geheimnis (Schlüssel) miteinander teilen.

Die Erfindung wird nachstehend anhand von in der Zeichnung veranschaulichten, bevorzugten Ausführungsbeispielen, auf die sie jedoch nicht beschränkt sein soll, noch weiter erläutert, wobei einleitend zur Erleichterung des Verständnisses auch Strukturen gemäß dem Stand der Technik erläutert werden sollen. Im Einzelnen zeigen:
Fig. 1 schematisch eine quantenkryptographische Verbindung zwischen zwei Partnern gemäß Stand der Technik;
Fig. 2 eine quantenkryptographische Verbindungseinrichtung gemäß Stand der Technik, wie sie im Wesentlichen für einen der Partner der Verbindung gemäß Fig. 1 vorhanden ist;
Fig. 3 ganz schematisch ein Netzwerk mit quantenkryptographischen Verbindungen zwischen Knoten, wobei innerhalb der einzelnen Knoten entsprechende Einheiten gemäß Fig. 2 für jede quantenkryptographische Verbindung vorhanden sind;
Fig. 4 in den Teilfiguren 4A bzw. 4B eine Knoteneinrichtung für die Bildung der Knoten im Netzwerk gemäß Fig. 3, wobei in Fig. 4A die herkömmliche Technologie und in Fig. 4B in Gegenüberstellung hierzu die Technologie gemäß der vorliegenden Erfindung schematisch gezeigt ist, bei der einzelne Komponenten der jeweiligen Einheiten für die quantenkryptographischen Verbindungen "herausgehoben" sind und als zentrale, gemeinsame Komponenten für alle Verbindungen benützt werden, so dass die diesen Verbindungen direkt zugehörigen Module entsprechend vereinfacht sind;
Fig. 5 schematisch in einem Blockschaltbild ein derartiges dezentrales, der jeweiligen quantenkryptographischen Verbindung zugeordnetes Quantenkanal-Modul; und
Fig. 6 schematisch in einem Blockschaltbild einen prinzipiellen Aufbau einer Knoteneinrichtung gemäß der Erfindung mit einem gemeinsamen, zentralen Knotenmodul und damit verbundenen dezentralen Quantenoptik-Modulen für die einzelnen quantenkryptographischen Verbindungen.

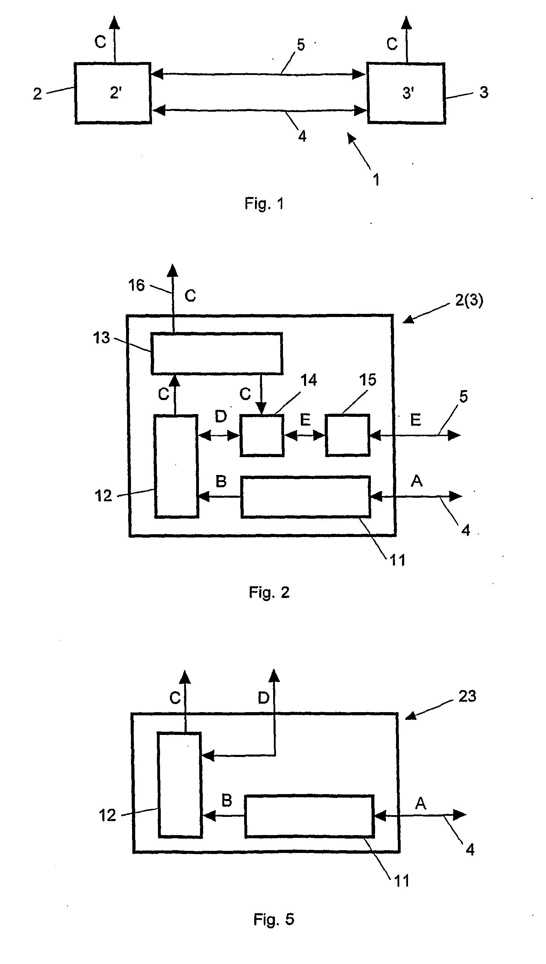

In Fig. 1 ist eine herkömmliche quantenkryptographische Verbindung 1 mit zwei Partnern 2, 3, mit entsprechenden Apparaturen 2' bzw. 3', gezeigt, wobei zwischen den beiden Partnern oder Stationen 2, 3 einerseits ein optischer Quantenkanal 4 und andererseits ein klassischer, öffentlicher Datenkanal 5 vorliegen. Der Quantenkanal 4 kann beispielsweise durch eine Glasfaserleitung oder aber durch den freien Raum gebildet sein, wobei in beiden Fällen entsprechende Sende- und Empfangseinrichtungen in den Apparaturen 2', 3' vorhanden sind. Die Stationen 2, 3 werden in der Literatur üblicherweise als ALICE-Komponente bzw. BOB-Komponente bezeichnet, und eine Stelle, die versucht den Quantenkanal 4, über den der Rohschlüssel ausgetauscht wird, abzuhören, wird in der Literatur üblicherweise mit EVE (Wortspiel, analog zu engl. eavesdropper - Lauscher oder Lauscherin) bezeichnet. Eine mehr ins Detail gehende Erläuterung insbesondere hinsichtlich der Ausbildung der einzelnen Komponenten sowie der physikalischen Vorgänge, und zwar auch im Fall eines Abhörversuches, kann sich hier im Hinblick auf die bereits genannte Literatur erübrigen. Nachfolgend soll nur der allgemeine Aufbau einer solchen Station 2 oder 3 anhand der Fig. 2 in einer allgemeinen Form näher erläutert werden.

Demgemäß zeigt Fig. 2 eine solche Station 2 (oder 3), die Quantenoptik-Mittel bzw. eine Quantenoptik-Komponente 11 enthält, die einem Quantenkanal 4 zugeordnet ist, über den Quanteninformation A in der Form von optischen Photonen ausgetauscht wird. Mit dieser Quantenoptik-Komponente 11 ist im gezeigten Beispiel eine Protokollprozessor-Komponente 12 verbunden, wobei dieser Protokollprozessor-Komponente 12 von der Quantenoptik-Komponente 11 Information B betreffend den Rohschlüssel (korrelierte Information) zur Verfügung gestellt wird. Die Protokollprozessor-Komponente 12 erzeugt daraus den Schlüssel bzw. allgemein das Geheimnis und leitet diesen bzw. dieses sodann gemäß dem Informationsfluss C in Fig. 2 einer Schlüsselverwaltungs-Komponente 13 zu. Auch ist gemäß Fig. 2 eine Kryptographie-Komponente 14 vorgesehen, die mit der Schlüsselverwaltungs-Komponente 13 sowie weiters mit der Protokollprozessor-Komponente 12, von der sie eine Protokoll-Nachricht D erhält, verbunden ist, und zwischen dieser Kryptographie-Komponente 14 und einer Treiber-Komponente 15 werden Kryptogramme (Daten bzw. Informationen E), also authentisierte Protokoll-Nachrichten, ausgetauscht. Diese Kryptogramme werden über den öffentlichen Kanal 5 übertragen. Weiters ist in Fig. 2 bei 16 veranschaulicht, dass Geheimnisse (Schlüssel) zur weiteren Verwendung in externen Anwendungen ausgegeben werden.

In den Quantenoptik-Mitteln bzw. -Komponenten 11 der ALICE- und BOB-Stationen 2 bzw. 3 wird unter Verwendung von optischen und elektronischen Baueinheiten, wie insbesondere Quanten-Quellen und Quanten-Detektoren, in herkömmlicher Weise Information in optische Quantensysteme kodiert, und es erfolgt hier die Übertragung zur jeweiligen Gegenstelle über den Quantenkanal 4. Der jeweilige optische Aufbau richtet sich im Einzelnen nach der verwendeten Technologie, wobei im vorliegenden Fall diese Technologie, was das nachstehend noch näher zu erläuternde Konzept der Netzwerk-Knoteneinrichtung betrifft, unerheblich ist, da diese Knoteneinrichtung bzw. das Knotenmodul mit beliebigen quantenkryptographischen Verbindungen betrieben werden kann.

Die Sicherheit der im Quantenkanal 4 übertragenen Information (Photonen mit bestimmten Eigenschaften) kommt daher, dass diese Information in nicht-orthogonale Quanten-Zustände kodiert wird, welche aufgrund der Heisenberg'schen Unschärferelation nicht mit Sicherheit unterschieden werden können, ohne das Quantensystem unwiderruflich zu stören. Abhören kann so zwar nicht verhindert, aber zuverlässig entdeckt werden.

Von den Quantenoptik-Komponenten 11 der Stationen 2, 3 werden laufend die Rohschlüssel B, bei welchen es sich im Prinzip um korrelierte klassische Information handelt (B in der ALICE-Station 2 korreliert mit B in der BOB-Station 3), an die Protokollprozessor-Komponenten 12 übertragen. In diesen wird programmgesteuert ein mehrstufiges Schlüsselerzeugungs-Protokoll abgearbeitet, um sowohl auf der ALICE-Seite 2 wie auch auf der BOB-Seite 3 einen identischen Schlüssel C an die jeweiligen Schlüsselverwaltungs-Komponenten 13 zu liefern. Im Zuge der Abarbeitung des Schlüsselerzeugungs-Protokolls müssen über einen herkömmlichen Datenkanal klassische Protokollnachrichten D ("klassisch" im Gegensatz zur Quanteninformation des Quantenkanals 4) zwischen den Protokollprozessor-Komponenten 12 von ALICE 2 und BOB 3 übertragen werden. Diese Nachrichten können unverschlüsselt übertragen werden, ohne die Sicherheit des Gesamtsystems zu kompromittieren, jedoch müssen für diese Nachrichten die Ursprungseigenschaft sowie die Vollständigkeitseigenschaft gewährleistet sein. Diese Eigenschaften, die unter dem Begriff "Authentizität" zusammengefasst werden, können mit symmetrischen kryptographischen Methoden (Kryptographische Prüfsummen mit informationstheoretischer Sicherheit, vgl. z.B. das Prinzip gemäß Wegman, M.N. and J. L. Carter, "New hash functions and their use in authentication and set equality", 1981, Journal of Computer and System Sciences 22, 265) mittels eines Teils der im laufenden Betrieb erzeugten und verteilten symmetrischen Schlüssel C in der Kryptographie-Komponente 14 sichergestellt werden. Das Kryptogramm E, die sog. authentisierte Protokollnachricht, wird schließlich von der Treiber-Komponente 15 für den öffentlichen Kanal 5 in diesen klassischen Datenkanal 5 eingespeist und zur Komplementär-Station übertragen, wo die Protokollnachricht nach Überprüfung der Authentizität an deren Protokollprozessor-Komponente 12 "geliefert" wird.

Es sei hier der Vollständigkeit halber erwähnt, dass der Prozess der kontinuierlichen Geheimnis-Erzeugung und Verteilung nur aufgenommen werden kann, wenn sowohl die ALICE-Station 2 als auch die BOB-Station 3 einer quantenkryptographischen Verbindung mit einem identischen, sog. Initial-Geheimnis versehen sind, da zur sicheren Erzeugung und Verteilung des "ersten" symmetrischen Geheimnisses bereits der authentisierte klassische Kommunikationskanal benötigt wird.

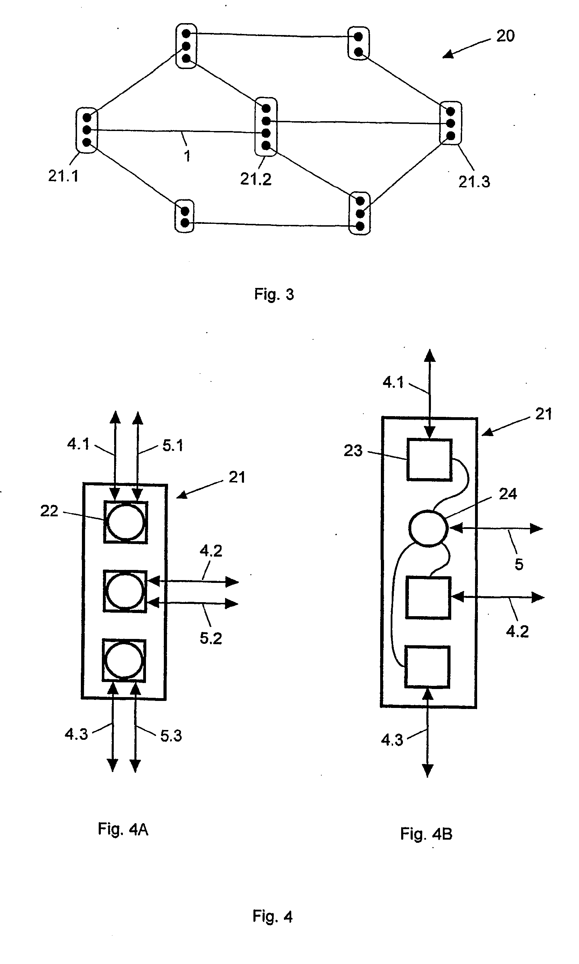

In Fig. 3 ist schematisch ein Netzwerk mit quantenkryptographischen Verbindungen wie vorstehend grundsätzlich erläutert gezeigt, wobei dieses Netzwerk 20 einzelne Knoten, z.B. 21.1, 21.2, 21.3,..., allgemein 21, enthält, die dazu helfen, größere Distanzen mit erhöhter Ausfallsicherheit bei der Datenübertragung überbrücken zu können, abgesehen davon, dass es auch möglich ist, über parallele Übertragungspfade, etwa bei Ausfall einer quantenkryptographischen Verbindung, den jeweils gewünschten Partner zu erreichen. Nur beispielhaft ist zwischen den beiden Knoten 21.1 und 21.2 eine quantenkryptographische Verbindung 1 im Wesentlichen gemäß Fig. 1 veranschaulicht, wobei ersichtlich ist, dass jeder Knoten (d.h. jede Knoteneinrichtung 21) für mehrere, z.B. zwei oder drei oder vier (s. Knoten 21.2) derartige quantenkryptographische Verbindungen 1 vorhanden ist. Im Einzelnen gehen dabei in einem solchen Netzwerk 20 von jedem Knoten zu anderen Knoten des Netzwerks 20 mehrere, im Fall des Knotens 21.1 drei Quantenkanäle und drei öffentliche Kanäle (s.Pos. 4 bzw. 5 in Fig. 1) aus. Vom Knoten 21.2 in Fig. 3 gehen sogar jeweils vier derartige Quantenkanäle bzw. öffentliche Kanäle aus. Zusätzlich besitzt jeder Knoten 21 für die jeweiligen quantenkryptographischen Verbindungen 1 eine durch einen schwarzen Punkt angedeutete Apparatur wie vorstehend anhand der Fig. 2 erläutert, d. h. im Fall des Knotens 21.1 sind drei derartige Apparaturen vorhanden, im Fall des Knotens 21.2 sogar vier Apparaturen. Insbesondere besitzt dabei jede Apparatur einer solchen quantenkryptographischen Verbindung, z.B. 1, eine eigene Implementierung der Schlüsselverwaltungs-Mittel 13, der Kryptographie-Mittel 14 sowie der Treiber-Mittel 15 für den öffentlichen Kanal 5.

In der Teilfigur 4A der Fig. 4 ist schematisch ein Knoten 21 mit z.B. drei Apparaturen wie anhand der Fig. 2 beschrieben veranschaulicht, wobei pro Apparatur, z.B. 22, symbolisch mit einem Quadrat bzw. einem Kreis verschiedene Gruppen von Komponenten veranschaulicht sind, wobei diese Komponenten beider Gruppen für jede Apparatur 22 implementiert sind. Von jeder Apparatur 22, gehen wie beschrieben ein Quantenkanal 4.1, 4.2 bzw. 4.3 sowie ein öffentlicher Kanal 5.1, 5.2 bzw. 5.3 aus.

Im Vergleich dazu ist der Netzwerks-Knoten 21 gemäß der Teilfigur 4B der Fig. 4 insofern modifiziert, als eine Gruppe von Komponenten (mit dem Symbol eines Kreises angedeutet) aus den einzelnen Apparaturen, z.B. 23, herausgehoben wurde, um so ein Knotenmodul 24 zu bilden, das als zentrales Modul für alle einzelnen, dezentralen Apparaturen, nachstehend Quantenkanal-Module 23 genannt, fungiert. Von den letzteren Quantenkanal-Modulen 23 geht nunmehr jeweils nur ein Quantenkanal 4.1, 4.2 bzw. 4.3 aus, während vom Knotenmodul 24 ein öffentlicher Kanal 5 ausgeht, über den die Knotenmodule 24 aller anderen Knoten 21 des quantenkryptographischen Netwerks 20 erreicht werden können. Dieser öffentliche Kanal 5 wird mittels eines herkömmlichen digitalen Kommunikations-Netzwerks realisiert (z.B. Internet), wobei es für die vorliegende Erfindung gleichgültig ist, welche Technologien bzw. Topologien im Einzelnen für dieses Netzwerk verwendet werden.

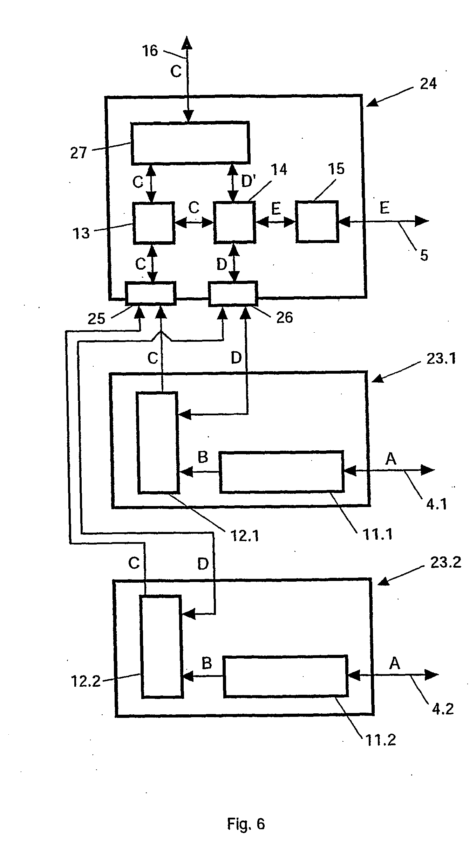

In Fig. 5 ist eine derartige modifizierte, hinsichtlich ihrer Implementierungen reduzierte dezentrale Apparatur, also ein solches Quantenkanal-Modul 23, veranschaulicht. Dabei ist ersichtlich, dass dieses Quantenkanal-Modul 23, im Vergleich zu Fig. 2 gesehen, nur mehr die Quantenoptik-Komponente 11 sowie die Protokollprozessor-Komponente 12 enthält. In Fig. 5 sind weiters in Entsprechung zur Fig. 2 die folgenden Datenflüsse angedeutet: A - Quanteninformation; B - Rohschlüssel (Korrelierte Information); C - Symmetrische Geheimnisse (Schlüssel); und D - Protokoll-Nachricht. Dieses Quantenkanal-Modul 23 entspricht somit einer ALICE- oder BOB-Apparatur, wobei aber die weiteren Komponenten, nämlich insbesondere die Schlüsselverwaltungs-Komponente, Kryptographie-Komponente und Treiber-Komponente für den öffentlichen Kanal, nunmehr zentral für alle diese Quantenkanal-Module 23 (bzw. gemäß Fig. 6: 23.1, 23.2.....), vorgesehen sind.

Dies ergibt sich aus der Darstellung in Fig. 6, wo das gemeinsame, zentrale Knotenmodul 24 in Zuordnung zu mehreren, z.B. zwei, Quantenkanal-Modulen 23.1, 23.2 veranschaulicht ist.

Die modifizierten quantenkryptographischen-Netzwerk-Verbindungen, d.h. die Quantenkanal-Module 23.1, 23.2 etc., welche weder eine Schlüsselverwaltungs-Komponente für die erzeugten symmetrischen Geheimnisse noch eine Kryptographie-Komponente für symmetrische kryptographische Verfahren noch eine Treiber-Komponente für den klassischen Datenkanal 5 besitzen, sind über Schnittstellen 25, 26 an das Netzwerk-Knotenmodul 24 angeschlossen. Über die Schnittstelle 25 (die "Schlüssel-Schnittstelle") liefern die modifizierten quantenkryptographischen-Netzwerk-Verbindungen bzw. Module 23 die erzeugten und verteilten symmetrischen Geheimnisse oder Schlüssel C an das zentrale Schlüsselverwaltungs-Modul 13 des Netzwerk-Knotenmoduls 24. Des Weiteren haben die modifizierten quantenkryptographischen-Netzwerk-Verbindungen bzw. Module 23 über die Schnittstelle 26 (die "Protokoll-Nachrichten-Schnittstelle") Schreib- und Lesezugriff auf den gemeinsamen klassischen Datenkanal 5 des Netzwerk-Knotens 21, der mit Hilfe der zentralen Kryptographie-Komponente 14 und den von der Schlüsselverwaltungs-Komponente 13 bereitgestellten Schlüsseln, je nach Bedarf, einen der folgenden Übertragungsmodi bereitstellt:
- Unverschlüsselte Übertragung mit Nachrichten-Authentisierung (mit informationstheoretischer Sicherheit)
- Verschlüsselte Nachrichten-Übertragung (mit informationstheoretisch beweisbarer Sicherheit der Stromchiffre - One
- Time Pad; vgl. z.B. den einleitend erwähnten Artikel von Gisin et al.)
- Verschlüsselte Übertragung mit Nachrichten-Authentisierung (beides mit informationstheoretischer Sicherheit)
- Unverschlüsselte Übertragung

Die gleichzeitige Bedienung der Link-Module 23 durch das zentrale Knotenmodul 24 wird z.B. durch in Computersystemen übliche Hintereinander-Ausführung bzw. Verzahnung von parallel auszuführenden Aufgaben (Zeitmultiplex) gewährleistet.

Diese Konzeption eines für den Netzwerk-Knoten 21 zentralen Knotenmoduls 24 erlaubt die Implementierung einer zentralen Netzwerk-Komponente 27 im Knotenmodul 24, welche, da sie ebenfalls Zugriff auf den gemeinsamen klassischen Kanal 5 (mit allen genannten Übertragungsmodi) hat, mit informationstheoretischer Sicherheit mit den Netzwerk-Komponenten benachbarter Netzwerk-Knoten 21 vertrauliche und unverfälschte Netzwerkprotokoll-Nachrichten D' austauschen kann. Mit "benachbarten Knoten" sind nicht notwendigerweise Netzwerkknoten gemeint, die eine modifizierte quantenkryptographische-Netzwerk-Verbindung teilen, sondern vielmehr Knoten, die Geheimnisse (Schlüssel) teilen, d.h., deren Netzwerk-Knotenmodule 24 in den Schlüsselverwaltungskomponenten 13 identische Geheimnisse (Schlüssel) vorrätig haben. Mit diesem Mechanismus können folgende Netzwerkfunktionalitäten implementiert werden:
- Übertragung ("Weiterreichung") von Geheimnissen (Schlüsseln) C aus der zentralen Schlüsselverwaltungs-Komponente 13 eines Netzwerk-Knotens 21 zur Schlüsselverwaltungs-Komponente 13 eines benachbarten (im oben erklärten Sinne) Netzwerk-Knotens. Mit diesem Mechanismus können Geheimnisse (Schlüssel) C zwischen beliebigen Knoten 21 des Netzwerks 20 verteilt werden und somit die oben genannte Distanzbeschränkung der Quantenkryptographie überwunden werden.
- Lastausgleichendes Weiterleiten (engl.: load balanced routing) von Schlüsseln, um Engpässe im Netzwerk 20 auszugleichen.
- Weiterleiten von Schlüsseln C über alternative Verbindungen, wenn bestimmte Verbindungen ausgefallen sein sollten.
- Verteilung von Initial-Geheimnissen für in die Netzwerkstruktur neu eingesetzte modifizierte quantenkryptographische-Netzwerk-Verbindungen zwischen zwei Netzwerk-Knoten, die bereits über einen anderen Weg (in graphentheoretischem Sinne) miteinander verbunden sind.

## Patentansprüche

1. Knoteneinrichtung (21) für ein Netzwerk (20) mit quantenkryptographischen Verbindungen (1) mit Quantenkanälen (4) und öffentlichen Kanälen (5), welche Knoteneinrichtung Quantenoptik-Mittel (11) zur Verbindung mit den jeweiligen Quantenkanälen, für die quantenkryptographische Erzeugung von Geheimnissen bzw. Schlüsseln, Mittel (13) zur Verwaltung von symmetrischen Geheimnissen bzw. Schlüsseln, Kryptographie-Mittel (14) zur Erzeugung von Kryptogrammen und damit verbundene Treiber-Mittel (15) zu deren Übertragung über einen öffentlichen Kanal aufweist, **dadurch gekennzeichnet, dass** die Mittel (13) zur Verwaltung von symmetrischen Geheimnissen bzw. Schlüsseln und die Kryptographie- sowie die Treiber-Mittel (14; 15) in einem gemeinsamen Knotenmodul (24) als zentrale Komponenten (13, 14, 15) für mehrere Quantenkanal-Verbindungen zusammengefasst sind, wogegen die Quantenoptik-Mittel (11) in dezentralen Modulen (23) für die mehreren Quantenkanal-Verbindungen gesondert vorgesehen sind.

2. Knoteneinrichtung nach Anspruch 1, **dadurch gekennzeichnet, dass** das gemeinsame Knotenmodul (24) als weitere zentrale Komponente eine Netzwerk-Komponente (27) in Verbindung mit der Verwaltungs-Komponente (13) und der Kryptographie-Komponente (14) enthält.

3. Knoteneinrichtung nach Anspruch 1 oder 2, **dadurch gekennzeichnet, dass** den Quantenkanal-Modulen (23) jeweils eine gesonderte Protokollprozessor-Komponente (12) zugeordnet ist.

4. Knotenmodul (24) für eine Knoteneinrichtung nach einem der Ansprüche 1 bis 3, **gekennzeichnet durch** eine zentrale Verwaltungs-Komponente (13) zur Verwaltung von Geheimnissen bzw. Schlüsseln, eine damit verbundene zentrale Kryptographie-Komponente (14) und eine damit verbundene zentrale Treiber-Komponente (15) für eine gemeinsame Benützung **durch** mehrere dezentrale Quantenkanal-Module (23).

5. Knotenmodul nach Anspruch 4, **gekennzeichnet durch** eine zentrale Netzwerk-Komponente (29) in Verbindung mit der Verwaltungs-Komponente (13) und der Kryptographie-Komponente (14).

## Claims

1. A node device (21) for a network (20) including quantum cryptographic links (1) with quantum channels (4) and public channels (5), which node device includes quantum optical means (11) for connection with the respective quantum channels, for the quantum cryptographic generation of secrets or keys, respectively, means (13) for managing symmetrical secrets or keys, respectively, cryptographic means (14) for generating cryptograms, and driver means (15) connected therewith for transmitting the same via a public channel, **characterized in that** the means (13) for managing symmetrical secrets or keys, respectively, and the cryptographic means as well as the driver means (14; 15) are combined in a joint node module (24) as central components (13, 14, 15) for several quantum channel links, whereas the quantum optical means (11) are separately provided in decentralized modules (23) for the several quantum channel links.

2. The node device according to claim 1, **characterized in that** the joint node module (24), as a further central component, comprises a network component (27) in connection with the management component (13) and the cryptographic component (14).

3. The node device according to claim 1 or 2, **characterized in that** the quantum channel modules (23) each have associated a separate protocol processor component (12).

4. A node module (24) for a node device according to any one of claims 1 to 3, **characterized by** a central management component (13) for managing secrets or keys, respectively, a central cryptographic component (14) connected therewith, and a central driver component (15) connected with the latter, for the shared use by several decentralized quantum channel modules (23).

5. The node module according to claim 4, **characterized by** a central network component (29) in connection with the management component (13) and the cryptographic component (14).

## Revendications

1. Dispositif nodal (21) pour un réseau (20) comprenant des connexions de cryptographie quantique (1) avec des canaux quantiques (4) et des canaux publics (5), lequel dispositif nodal présente des moyens d'optique quantique (11) pour la connexion aux canaux quantiques respectifs, pour la génération par cryptographie quantique de secrets ou de clés, des moyens (13) pour la gestion de secrets ou de clés symétriques, des moyens de cryptographie (14) pour la génération de cryptogrammes et des moyens de commande (15) qui leur sont liés pour leur transmission sur un canal public, **caractérisé en ce que** les moyens (13) pour la gestion de secrets ou de clés symétriques et les moyens de cryptographie et de commande (14 ; 15) sont réunis dans un module nodal commun (24) sous la forme de composants centraux (13, 14, 15) destinés à plusieurs connexions avec des canaux quantiques, tandis que les moyens d'optique quantique (11) sont prévus séparément dans des modules décentralisés (23) destinés à plusieurs connexions avec des canaux quantiques.

2. Dispositif nodal selon la revendication 1, **caractérisé en ce que** le module nodal commun (24) contient, comme autre composant central, un composant de réseau (27) en liaison avec le composant de gestion (13) et le composant de cryptographie (14).

3. Dispositif nodal selon la revendication 1 ou 2, **caractérisé en ce que** l'on affecte respectivement un composant de processeur de protocole séparé (12) aux modules de canaux quantiques (23).

4. Module nodal (24) destiné à un dispositif nodal selon l'une quelconque des revendications 1 à 3, **caractérisé par** un composant de gestion central (13) pour la gestion de secrets ou de clés, un composant de cryptographie central (14) qui lui est lié et un composant de commande central (15) qui lui est lié pour un usage commun par plusieurs modules de canaux quantiques décentralisés (23).

5. Module nodal selon la revendication 4, **caractérisé par** un composant de réseau central (29) en liaison avec le composant de gestion (13) et le composant de cryptographie (14).
